# FASCICULE DE BREVET EUROPEEN

(11) **EP 4 211 455 B1**
(45) Date de publication et mention de la délivrance du brevet: **12.06.2024**
(21) Numéro de dépôt: 21773561.2
(22) Date de dépôt: 07.09.2021
(51) Int. Cl.: G01N 29/04, G01N 29/22, G01N 29/24, G01N 29/26, G01N 29/28

(54) **DISPOSITIF CONFORMABLE DE CONTRÔLE INSTANTANÉ NON DESTRUCTIF PAR ULTRASONS**
FLEXIBLES GERÄT ZUR SOFORTIGEN ZERSTÖRUNGSFREIEN KONTROLLE
FLEXIBLE DEVICE FOR NON-DESTRUCTIVE INSTANTANEOUS CONTROL USING ULTRASOUND

(30) Priorité: 07.09.2020 FR 2009071
(43) Date de publication de la demande: 19.07.2023
(73) Titulaire: GRTgaz, 92270 Bois-Colombes (FR); GRDF, 75009 Paris (FR)
(72) Inventeur: GUEUGNAUT, Dominique, 75005 PARIS (FR); SOLEAU, Pierre, 75013 PARIS (FR); AUSSANT, Pascal, 95800 CERGY-LE-HAUT (FR)
(74) Mandataire: Cornuejols, Georges
(86) Numéro de dépôt international: PCT/EP2021/074620
(87) Numéro de publication internationale: WO 2022/049309

(56) Documents cités:
- EP-A1- 1 312 423
- WO-A1-2018/132443
- US-A1- 2015 158 052

## Description

### Domaine technique de l'invention

La présente invention vise un dispositif conformable de contrôle instantané non destructif par ultrasons, par exemple de tubes en matières plastiques et de leurs assemblages. Elle s'applique, notamment, au domaine de la détection de défauts et de fissures internes à des pièces, à des canalisations ou à des jonctions soumises à des efforts continus ou répétés, tels que des mouvements ou une pression.

### État de la technique

On connaît des techniques de contrôle non destructif par ultrasons et notamment la technique ultrasons multi-éléments (« PA UT » pour « Phased Array Utrasonic Testing/Technique »). La technologie multiéléments consiste à utiliser des barrettes constituées de plusieurs traducteurs élémentaires identiques excités chacun avec un écart de temps (retard de phase) qui crée un faisceau par interférences constructives. On peut ainsi créer des faisceaux inclinés ou focalisés avec des traducteurs au contact sur des surfaces droites ou incurvées. En modifiant d'un tir à l'autre ces retards de phase, le faisceau est soit déplacé, soit modifié dans sa direction. On crée ainsi un phénomène de "balayage" qui est soit un balayage linéaire, soit un balayage sectoriel. De plus, on peut y superposer une focalisation électronique sans déplacer le traducteur ou sans adapter sa surface d'entrée. Ces technologies sont directement issues des technologies médicales et ont été adaptées aux problèmes industriels et aux matériaux industriels.

Dans le contrôle des soudures, le contrôle par technique PA UT présente l'avantage de limiter le mouvement de va et vient traditionnel du traducteur. En effet, celui-ci est remplacé par un balayage électronique en utilisant des traducteurs comportant par exemple 16, 64 ou 128 éléments - configurations les plus courantes en pratique - qui couvrent la totalité de la soudure. Un autre élément intéressant peut être de remplacer le contrôle sous plusieurs incidences successives (45°; 60°; 70°) par un seul passage avec un balayage sectoriel qui couvrira l'ensemble des angles compris entre 45° et 70° par exemple.

Cependant, pour l'auscultation d'assemblage soudés en PE (polyéthylène) avec des géométries complexes et de faibles rayons de courbure, il reste nécessaire de déplacer les capteurs afin de couvrir l'ensemble de l'assemblage.
Le grand nombre de données généré permet la visualisation sous forme d'images. Plusieurs types d'imagerie peuvent être générées. Tout d'abord le S-scan (ou sectoriel scan) qui représente une imagerie de type coupe en utilisant l'axe électronique comme un axe mécanique. C'est-à-dire que si l'on paramètre le contrôle "Phased Array" en balayage sectoriel, l'imagerie de type S-scan représente la coupe sous le traducteur avec les différents angles de contrôle. C'est ce type d'imagerie qui est couramment utilisée en échographie médicale.

Une version améliorée de cette technique est connue sous le nom « PA UT / TFM-FMC », TFM étant l'acronyme de « Total Focusing Method » et FMC celui de « Full Matrix Capture », une technique de réseau à ultrasons qui est utilisée pour se concentrer synthétiquement à chaque point d'une région d'intérêt. Elle présente les avantages suivants par rapport à la technique PA UT classique :
- même type de traducteurs ;
- pas de formation de faisceaux (trajet compliqué) ;
- discrétisation de la pièce : signaux organisés sous forme de matrice ;
- algorithmes spécifiques de reconstruction d'image ;
- focalisation synthétique en chaque point du maillage sur la base de lois de retard selon un mode de reconstruction défini ;
- mieux adapté aux variations de surface (irrégularités, différences d'épaisseur) ; et
- amélioration à la fois de la détection et du dimensionnement des défauts.

La mise en oeuvre de ces deux techniques requiert une auscultation discrète et séquencée du composant plastique, parfois longue et difficile, compte tenu de l'accès limité à certaines zones d'intérêt.

### Présentation de l'invention

La présente invention vise à remédier à tout ou partie de ces inconvénients.

À cet effet, la présente invention vise, selon un premier aspect, un dispositif conformable de contrôle instantané non destructif par ultrasons d'au moins une pièce solide, qui comporte :
- une enveloppe souple munie d'une pluralité de compartiments étanches à un agent liquide de couplage ultrasonore et
- dans chacun d'au moins deux des compartiments, une barrette de traducteurs ultrasonores baignant, sur au moins une face, dans ledit agent de couplage ultrasonore.
- un moyen de séquencement des fonctionnements en émission et/ou en réception d'au moins deux des dites barrettes de traducteurs ultrasonores et
- un moyen de traitement des signaux représentatifs des ondes ultrasonores reçues par au moins deux des barrettes pour constituer une représentation agrégeant les représentations des champs d'exploration desdites barrettes.

Grâce à ces dispositions, le contrôle se fait à sec, c'est-à-dire sans enduire préliminairement une pièce à contrôler avec un agent liquide conducteur d'ultrasons. On évite ainsi d'avoir à nettoyer l'assemblage après le contrôle et on évite les risques d'interaction chimique éventuelle, de réaction ou d'émanation liés à l'agent de couplage. De plus, l'enveloppe étant souple, elle peut être conformée pour épouser une surface extérieure de chaque pièce à contrôler, notamment dans le cas de faibles rayons de courbure des pièces à ausculter.

L'invention permet d'éviter d'avoir à déplacer le dispositif, même pour des formes complexes et de faibles rayons de courbure grâce à la fois à une multiplication des barrettes de traducteurs ultrasonores et à un positionnement statique optimisé sur la quasi-totalité de la surface de la pièce.

Le dispositif objet de l'invention présente aussi les avantages suivants :
- il présente une enveloppe souple intégrant l'ensemble des barrettes de traducteurs ultrasonores ;
- il permet une redondance des mesures pour une précision accrue par activation de tout ou partie des barrettes de traducteurs ultrasonores ;
- il permet l'utilisation de la technique TFM-FMC, qui apporte une plus grande souplesse au niveau de la capture d'ultrasons et une plus grande précision au niveau des résultats de mesure.

Dans des modes de réalisation, l'agent de couplage ultrasonore remplit complètement chaque compartiment contenant une barrette de traducteurs ultrasonores.

Grâce à ces dispositions, chaque compartiment contenant une barrette de traducteurs ultrasonores ne comporte pas de bulle susceptible de provoquer une réflexion parasite des ondes ultrasonores émises par la barrette de traducteurs ultrasonores.

Dans des modes de réalisation, le dispositif objet de l'invention comporte, entre au moins deux compartiments, au moins un élément flexible pour prendre une forme arrondie et peu extensible ou compressible.

Grâce à ces dispositions, la distance, le long de l'enveloppe, entre les barrettes de traducteurs ultrasonores présents dans ces compartiments est sensiblement constante alors même que l'enveloppe s'enroule autour d'un tube en provoquant un pliage de l'élément flexible. Cette distance sensiblement constante entre les barrettes de traducteurs ultrasonores favorise le bon fonctionnement du traitement des signaux ultrasonores reçus par les barrettes de traducteurs ultrasonores.

Dans des modes de réalisation, au moins un élément flexible est rapporté dans l'enveloppe.

Dans des modes de réalisation, au moins un élément flexible est partie intégrante de l'enveloppe.

Dans des modes de réalisation, le dispositif comporte un moyen de fermeture de l'enveloppe sur elle-même.

Grâce à ces dispositions, l'agent de couplage ultrasonore présent dans chaque compartiment est plaqué contre la surface d'une pièce à contrôler, si bien que les ondes ultrasonores se diffusent dans la pièce et, inversement, la réflexion de ces ondes ultrasonores retourne à la barrette de traducteurs ultrasonores à travers l'agent de couplage ultrasonore.

Dans des modes de réalisation, l'enveloppe comporte un matériau élastomère. Dans des modes de réalisation, l'enveloppe comporte du silicone.

Ces matériaux présentent l'avantage d'être facilement moulés pour former les compartiments et de se conformer facilement à la chaque pièce à contrôler, tout en assurant une faible extensibilité.

Selon un deuxième aspect, la présente invention vise une application du dispositif objet de l'invention à l'inspection d'au moins un tube ou un assemblage de tubes en matières plastiques.

Selon un troisième aspect, la présente invention vise un procédé de contrôle instantané non destructif par ultrasons d'au moins une pièce solide, qui comporte :
- une étape d'enveloppement d'une partie de chaque pièce à contrôler, avec une enveloppe souple munie d'une pluralité de compartiments étanches à un agent liquide conducteur d'ultrasons, chacun d'au moins deux des compartiments contenant une barrette de traducteurs ultrasonores baignant, sur au moins une face, dans ledit agent conducteur.
- une étape d'émission d'ondes ultrasonores par au moins deux de ces barrettes de traducteurs ultrasonores,
- une étape de réception des signaux ultrasonores reçus par au moins deux de ces barrettes de traducteurs ultrasonores,
- une étape de séquencement des fonctionnements en émission et/ou en réception d'au moins deux des dites barrettes de traducteurs ultrasonores et
- une étape de traitement des signaux représentatifs de ondes ultrasonores reçues par au moins deux des barrettes pour constituer une représentation agrégeant les représentations des champs d'exploration desdites barrettes.

La présente invention permet ainsi d'embrasser l'ensemble de la pièce et d'en réaliser le contrôle complet, de manière quasi immédiate.

Les avantages, buts et caractéristiques particulières de cette application et de ce procédé étant similaires à ceux du dispositif objet de l'invention, ils ne sont pas rappelés ici.

### Brève description des figures

D'autres avantages, buts et caractéristiques particulières de l'invention ressortiront de la description non limitative qui suit d'au moins un mode de réalisation particulier du dispositif objet de la présente invention, en regard des dessins annexés, dans lesquels :
La figure 1 représente, en perspective, un mode de réalisation particulier du dispositif objet de l'invention,
La figure 2 représente une coupe latérale d'un compartiment du dispositif illustré en figure 1, avant la pose du dispositif sur une pièce à contrôler,
La figure 3 représente une coupe longitudinale du compartiment illustré en figure 2, avant la pose du dispositif sur une pièce à contrôler,
La figure 4 représente une coupe latérale du compartiment illustré en figures 2 et 3, après la pose du dispositif sur une pièce à contrôler,
La figure 5 représente une coupe longitudinale du compartiment illustré en figures 2 à 4, après la pose du dispositif sur une pièce à contrôler,
La figure 6 représente, en perspective, un manchon électrosoudé à contrôler, avant la pose d'un dispositif objet de l'invention,
La figure 7 représente, en perspective, le manchon représenté en figure 6, après la pose d'un dispositif objet de l'invention,
La figure 8 représente, en coupe, le manchon et le dispositif selon l'invention illustrés en figure 7,
La figure 9 représente, en vue de dessus, une première configuration de barrettes de traducteurs ultrasonores,
La figure 10 représente, en vue de dessus, une deuxième configuration de barrettes de traducteurs ultrasonores,
La figure 11 représente, en vue de dessus, une troisième configuration de barrettes de traducteurs ultrasonores,
La figure 12 représente, en perspective, une selle de branchement électrosoudée à contrôler, avant la pose d'un dispositif objet de l'invention,
La figure 13 représente, en perspective, la selle de branchement représentée en figure 12, après la pose d'un dispositif objet de l'invention,
La figure 14 représente, en coupe, la selle de branchement et le dispositif selon l'invention illustrés en figure 13,
La figure 15 représente, en perspective, un assemblage de deux tubes soudés au miroir après la pose d'un dispositif objet de l'invention,
La figure 16 représente, sous forme d'un logigramme, des étapes d'un procédé de mise en oeuvre d'un dispositif objet de l'invention,
La figure 17 représente une première image partielle des pièces à contrôler,
La figure 18 représente une deuxième image partielle des pièces à contrôler,
La figure 19 représente une troisième image partielle des pièces à contrôler et
La figure 20 représente une construction d'une image des pièces à contrôler.

### Description des modes de réalisation

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

Le dispositif objet de l'invention vise le contrôle instantané non destructif par ultrasons. Ce dispositif conformable comporte une enveloppe souple contenant les barrettes de traducteurs ultrasonores, aussi appelés transducteurs, c'est-à-dire des éléments qui reçoivent un signal d'entrée sous la forme d'une première grandeur physique, ici un courant électrique, et qui émet un signal de sortie sous la forme d'une autre grandeur physique dite grandeur traduite, ici des ultrasons. Les barrettes de traducteurs ultrasonores considérées dans la présente invention comportent préférentiellement des capteurs d'ondes ultrasonores qui assurent, lors du retour des ondes ultrasonores, l'émission d'un signal électrique représentatif des ondes captées. C'est ce second signal électrique qui est traité pour déterminer des éventuels défauts, par exemple en produisant une image similaire à celle produite en échographie médicale ou une représentation volumique en trois dimensions dans laquelle un opérateur peut naviguer et/ou dans laquelle un système de traitement automatique peut extraire des anomalies et/ou quantifier un niveau de conformité avec une spécification technique des pièces contrôlées.

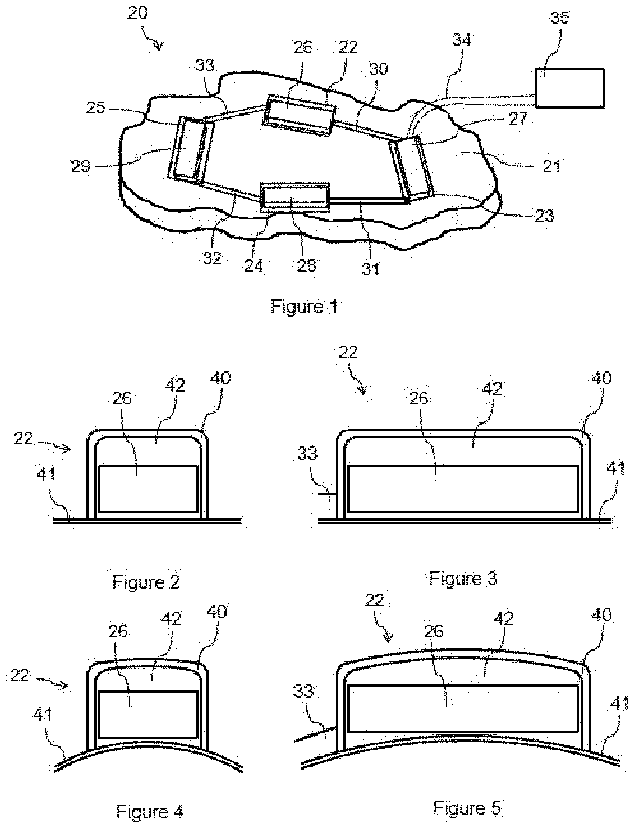

Dans le premier mode de réalisation illustré en figures 1 à 5, le dispositif 20 comporte une enveloppe souple 21 comportant des compartiments étanches 22 à 25, chaque compartiment comportant une barrette de traducteurs ultrasonores 26 à 29, respectivement. Dans ce mode de réalisation, des écarteurs flexibles 30 à 33 maintiennent sensiblement constante la distance entre les compartiments, deux à deux, tout en étant souples pour être déformés lors de l'application du dispositif sur une surface courbe, par exemple un tube ou un assemblage de tubes, par exemple raccord, prise, manchon ou accessoire. Des liaisons électriques 34 relient les barrettes de traducteurs ultrasonores 26 à 29 à un moyen 35 de séquencement du fonctionnement des barrettes de traducteurs ultrasonores 26 à 29 et de traitement des signaux.

Comme illustré en figure 2, un compartiment, ici le compartiment 22, est formé d'une alvéole 40 en matériau souple, par exemple à base de matériau élastomère, par exemple à base de silicone, fermée par une membrane souple étanche 41, transparente aux ondes ultrasonores utilisées. Dans l'espace étanche ainsi formé se trouvent une barrette de traducteurs ultrasonores 26 entourée d'un agent liquide de couplage 42, par exemple du gel ou un liquide tel que de l'eau ou de l'alcool, transparent aux ondes ultrasonores mises en oeuvre par la barrette de traducteurs ultrasonores 26. L'agent de couplage 42 est tel que celui utilisé pour les mesures par ultrasons classiques ou encore pour l'échographie médicale. Préférentiellement, l'agent de couplage 42 remplit l'espace laissé dans l'alvéole 40 par la barrette de traducteurs ultrasonores 26. Il n'y a, ainsi, pas de bulle dans cette alvéole 40.

Préférentiellement, l'agent de couplage 42 présente une viscosité et/ou une tension superficielle assurant l'existence d'un film entre la barrette 26 de traducteurs ultrasonores et la membrane souple étanche 41, même lorsque le compartiment 22 est déformé par la déformation de l'enveloppe souple 21. Alternativement, pour assurer la présence de ce film d'agent de couplage entre la barrette 26 et la membrane 41, on dispose, aux extrémités les plus éloignées de la barrette 26, des flancs qui dépassent de la surface de la barrette 26 orientée vers la membrane 41. On observe, en figure 3, les mêmes éléments qu'en figure 2, auxquels s'ajoute l'écarteur 33. Selon les modes de réalisation, l'écarteur 33 est formé du même matériau que le compartiment 22, éventuellement dopé, ou est une pièce souple rapportée dans le matériau constituant l'enveloppe 21.

Comme on l'observe en figures 4 et 5, lorsque le compartiment 22 est appliqué sur une surface courbe d'une pièce ou d'un assemblage de pièces, la membrane souple 41 se déforme et épouse la forme de cette surface. L'agent de couplage 42 est donc, à l'épaisseur de la membrane 41 près, au contact de la surface courbe. Cette jonction assure la transmission des ondes ultrasonores depuis la barrette de traducteurs ultrasonores 26 jusqu'à la surface courbe et, inversement, depuis la surface souple jusqu'à la barrette de traducteurs ultrasonores 26. Comme on l'observe en figures 4 et 5, la barrette de traducteurs ultrasonores 26, rigide, se déplace dans le compartiment 22 de manière à rester en contact ou à proximité de la surface souple en au moins un de ses points. L'écarteur 33 se déforme aussi pour suivre la courbure de la surface courbe tout en maintenant la distance, le long de l'enveloppe 21, avec un autre compartiment.

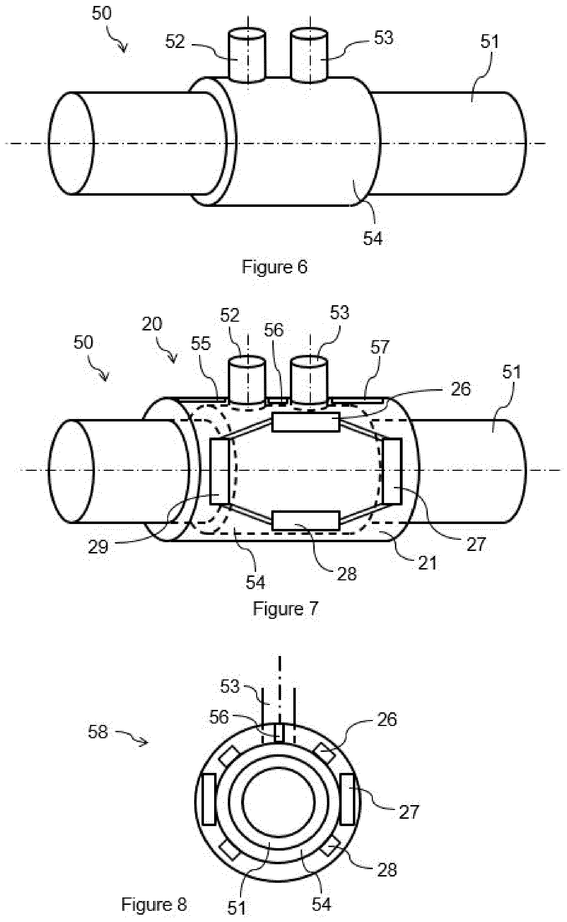

On observe, en figure 6, un assemblage 50 d'un tube 51 et d'un manchon 54 électro-soudé 50, dont la soudure est à contrôler. Ce manchon 54 comporte deux connecteurs électrique 52 et 53 du manchon qui permettent de brancher une machine à souder et d'envoyer l'énergie désirée à des fils résistifs noyés au voisinage de la surface intérieure du manchon qui se retrouve au contact de la surface extérieure du tube 51.

Comme illustré en figure 7, lorsque le dispositif 20 est appliqué sur le tube 51 et le manchon 54, l'enveloppe 21 se déforme pour épouser la surface externe courbe de l'assemblage 50. Les barrettes de traducteurs ultrasonores 26 à 29 sont préférentiellement positionnées au-dessus et autour du manchon 54. Un système de fermeture, ici en trois parties 55 à 57, assure la mise en tension de l'enveloppe 21 et le maintien de la membrane 41 en appui sur cette surface externe courbe. Les parties 55 à 57, positionnées de part et d'autre de chaque connecteur 52 et 53 sont, par exemple, de type auto-agrippant (aussi connu sous le nom de Velcro, marque déposée), de type à aimants permanents ou de points de colle non permanente, comme par exemple les colles sensibles à la pression.

Le dispositif 58 représenté en figure 8 comporte, en une seule enveloppe continue enveloppant l'ensemble du manchon 54, les barrettes ultrasonores de deux dispositifs 20.

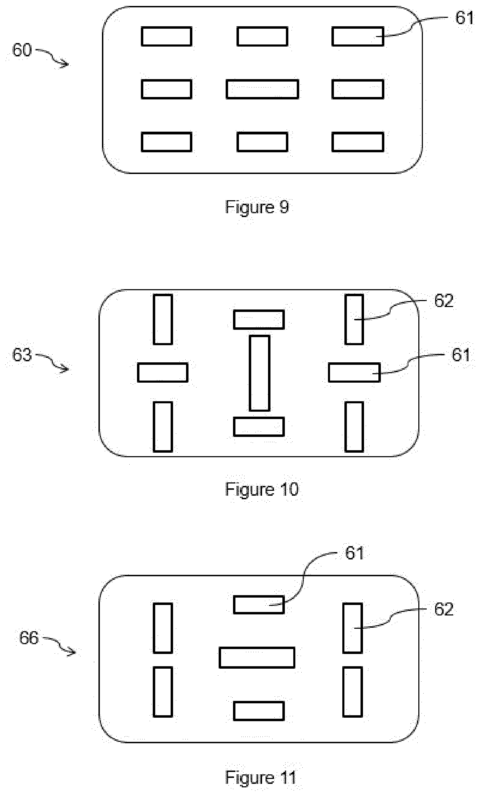

On observe, en figures 9 à 11, trois exemples de configurations de barrettes de traducteurs ultrasonores. La première configuration 60 illustrée en figure 9 ne comporte que des barrettes de traducteurs ultrasonores 61 parallèles au plus grand côté de l'enveloppe. La deuxième configuration 63 illustrée en figure 10 comporte une alternance, en quinconce de barrettes de traducteurs ultrasonores 61 parallèles au plus grand côté de l'enveloppe et de barrettes de traducteurs ultrasonores 62 perpendiculaires au plus grand côté de l'enveloppe. La troisième configuration 66 illustrée en figure 11 comporte successivement, en suivant le plus grand côté de l'enveloppe, deux barrettes de traducteurs ultrasonores 62 perpendiculaires à ce plus grand côté, trois barrettes de traducteurs ultrasonores 61 parallèles à ce plus grand côté et deux barrettes de traducteurs ultrasonores 62 perpendiculaires à ce plus grand côté. Bien entendu, tout autre configuration et toute autre orientation des barrettes de traducteurs ultrasonores peuvent être utilisées pour la mise en oeuvre de la présente invention.

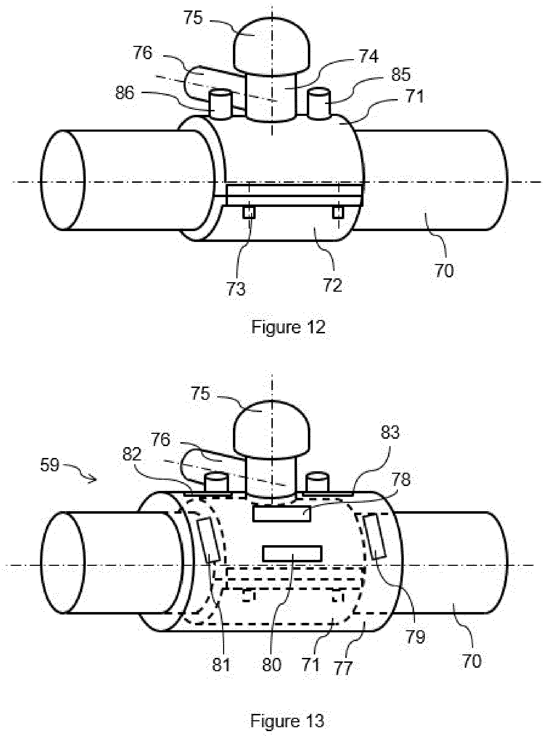

Les figures 12 à 14 représentent des exemples de mise en application d'un dispositif 59 objet de l'invention sur une selle 71 et 72 de branchement électrosoudée sur un tube 70 et comportant un fût 74 équipé intérieurement d'un outil (non représenté sur la figure) permettant de percer le tube sous-jacent après soudage, afin d'assurer la distribution du fluide vers l'aval du branchement domestique ou industriel via la sortie de dérivation 76. Le bouchon 75 du fût de la prise (selle) de branchement électro-soudable assure l'étanchéité du fût de la selle. Les connecteurs électrique 85 et 86 permettent de relier la pièce à une machine de soudage chargée de délivrer l'énergie électrique adéquate aux fils résistifs noyés au voisinage de la surface intérieure de la selle qui va se trouver au contact de la surface extérieure du tube après mise en place et serrage sur celui-ci.

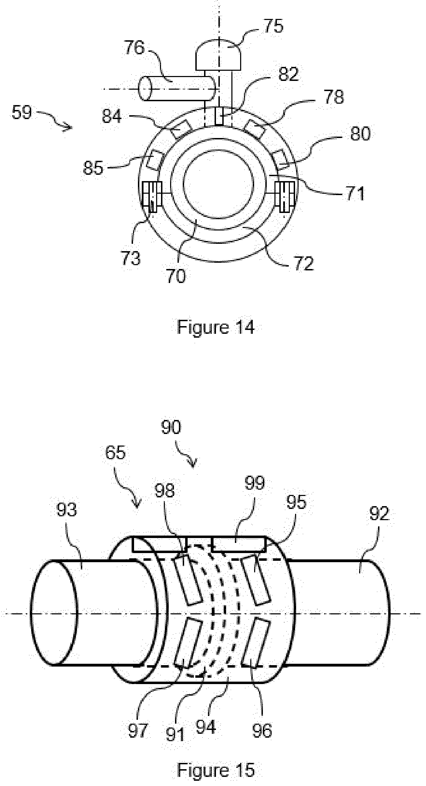

La selle comporte une demi-selle supérieure 71 électrosoudée et une demi-selle inférieure 72 jointe à la demi-selle supérieure 71 par une fixation 73, typiquement un filetage dans l'une des demi-selle et une vis traversant l'autre demi-selle.
Une fois l'enveloppe 77 du dispositif appliquée sur et autour de la selle 71 et 72, des barrettes de traducteurs ultrasonores 78 à 81, 84 et 85 (voir figure 14) entourent la zone de soudure.

Un système de fermeture, ici en deux parties 82 et 83, positionnées de part et d'autre du fût 74, assure la mise en tension de l'enveloppe 77 et le maintien de la membrane étanche fermant les alvéoles et des barrettes de traducteurs ultrasonores, en appui sur la surface externe courbe de l'assemblage. Les parties 82 et 83 sont, par exemple, de type auto-agrippant (aussi connu sous le nom de Velcro, marque déposée), de type à aimants permanents ou de points de colle non permanente, comme par exemple les colles sensibles à la pression.

On note que seules des barrettes de traducteurs ultrasonores en partie supérieure 71 de la selle électrosoudée ont besoin d'être activés, la selle inférieure de maintien 72 n'étant pas soudée sur le tube 70.

La figure 15 représente un exemple de mise en application d'un dispositif 65 objet de l'invention sur un assemblage 90 de deux tubes 92 et 93 soudés « au miroir », c'est-à-dire bout à bout et formant, entre eux, un bourrelet de soudure 91 résultant de la fusion des bouts des tubes 92 et 93.

Un système de fermeture, ici en deux parties 99, positionnées de part et d'autre du bourrelet 91, assure la mise en tension de l'enveloppe 94 et le maintien de la membrane étanche fermant les alvéoles et des barrettes de traducteurs ultrasonores 95 à 98 en appui sur la surface externe courbe de l'assemblage 90. Les parties 99 sont, par exemple, de type auto-agrippant (aussi connu sous le nom de Velcro, marque déposée), de type à aimants permanents ou de points de colle non permanente, comme par exemple les colles sensibles à la pression.

Selon l'application visée, les dimensions de l'enveloppe souple, et le positionnement des compartiments sont optimisés afin que l'ensemble des ondes ultrasonores réfléchies soient représentatives des éventuels défauts de soudure ou fissures internes à l'assemblage analysé.

Par exemple, pour un assemblage électrosoudé, tel que celui représenté en figures 6 à 8, de diamètre extérieur 20 mm par exemple, un nombre minimal de dix barrettes de traducteurs ultrasonores selon l'axe du manchon et de dix barrettes de traducteurs ultrasonores orientées, par rapport aux premières, selon un angle compris entre 0 et 90 degrés, constitue une configuration intéressante.

Pour une selle de branchement, telle que celle illustrée en figures 12 à 14, de diamètre extérieur 63 mm par exemple, un nombre minimal de 20 barrettes de traducteurs ultrasonores selon l'axe du manchon et de 20 barrettes de traducteurs ultrasonores orientées, par rapports aux premières, selon un angle compris entre 0 et 90 degrés, constitue une configuration intéressante.

Pour un assemblage soudé au miroir, tel que celui illustré en figure 15, de diamètre extérieur 160 mm par exemple, un nombre minimal de 20 barrettes de traducteurs ultrasonores disposées régulièrement parallèlement au bourrelet de soudage 91, constitue une configuration intéressante.

D'une manière générale, les barrettes de traducteurs ultrasonores sont disposées dans les compartiments individuels de manière adéquate en termes d'orientation. Un agent de couplage remplit l'enveloppe et les compartiments pour permettre la transmission et le retour des signaux ultrasonores. La souplesse de l'ensemble, ainsi que la multiplicité et la répartition des barrettes de traducteurs ultrasonores, permettent de recouvrir complètement les composants plastiques à contrôler et de réaliser l'ensemble des mesures, à sec, c'est-à-dire sans enduire les pièces de l'assemblage d'agent de couplage, en une seule fois.

L'enveloppe souple peut être fabriquée de manière similaire aux moules souples de pâtisserie ou aux bacs souples à glaçons.

La membrane souple a, typiquement, une épaisseur de l'ordre du millimètre. Elle peut être, par exemple, en matériau à base de polymère ou d'élastomère.

Les barrettes de traducteurs ultrasonores sont telles que les barrettes de traducteurs ultrasonores utilisées pour les mesures PA UT de type connu. Chaque barrette de traducteurs ultrasonores contient, par exemple, entre 16 et 256 éléments de mesure.

L'alimentation électrique des barrettes de traducteurs ultrasonores, la commande de leur fonctionnement, en émission et/ou en réception et le retour de signaux représentatifs des ondes ultrasonores reçues par ces barrettes vers le moyen de séquencement et de traitement des signaux 35 peuvent se faire de manière filaire ou non filaire, par onde radio par exemple.

Le dispositif objet de l'invention présente les avantages décrits en préambule ainsi que celui d'effectuer un contrôle à sec, c'est-à-dire sans enduire d'agent de couplage les pièces de l'assemblage à contrôler.

Concernant les vitesses de propagation de l'onde ultrasonore dans les matériaux, on donne le tableau suivant, qui représente les vitesses longitudinales dans des matériaux communs.

**TABLEAU 1**

| Matériau | Vitesse (m/sec) |
|---|---|
| Acrylique (Perspex, marque déposée) | 2730 |
| Aluminium | 6320 |
| Béryllium | 12900 |
| Laiton | 4430 |
| Composite, graphite/époxy | 3070 |
| Cuivre | 4660 |
| Diamant | 18000 |
| Fibre de verre | 2740 |
| Glycérine | 1920 |
| Inconel (marque déposée) | 5820 |
| Fonte de fer (malléable) | 3500 |
| Fonte de fer (dure) | 5600 |
| Oxyde de fer (magnétite) | 5890 |
| Plomb | 2160 |
| Lucite (marque déposée) | 2680 |
| Molybdène | 6250 |
| Huile moteur | 1740 |
| Nickel, pur | 5630 |
| Polyamide | 2200 |
| Nylon (marque déposée de polyamide) | 2600 |
| Polyéthylène, haute densité (HDPE) | 2460 |
| Polyéthylène, faible densité (LDPE) | 2080 |
| Polystyrène | 2340 |
| Polyvinylchloride, (PVC) | 2395 |
| Caoutchouc, polybutadiène (élastomère) | 1610 |
| Silicium | 9620 |
| Silicone | 1485 |
| Acier 1020 | 5890 |
| Acier 4340 | 5850 |
| Acier inoxydable 302 | 5740 |
| Etain | 3320 |
| Titane | 6100 |
| Tungstène | 5180 |
| Eau (20°C) | 1480 |
| Zinc | 4170 |
| Zirconium | 4650 |
| Polyfluorure de vinylidène (PVDF) | |
| Polycarbonate (PC) | |
| Polymétacrylate de méthyle (PMMA), plexiglas (marque déposée) | 2700 |
| Polyuréthane | 2010 |

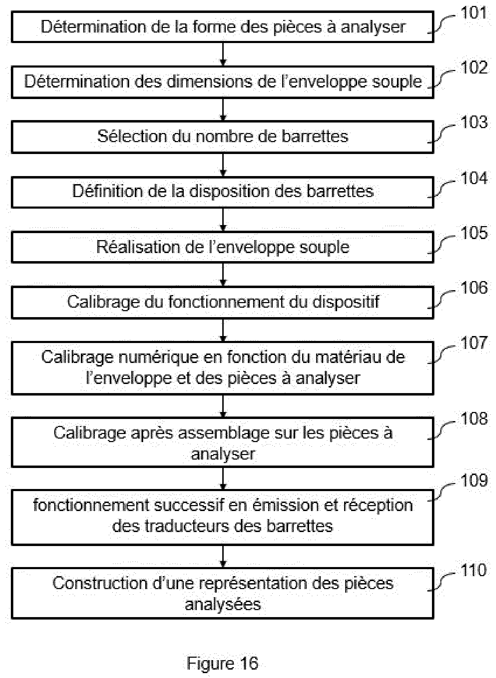

On observe, en figure 16, des étapes d'un procédé 100 de mise en oeuvre du dispositif de la présente invention.
- Au cours d'une étape 101, on détermine les dimensions et les courbures de la pièce ou de l'assemblage à contrôler ; Cette détermination peut être faite par mesure ou par connaissance de la conception de cette pièce ou de cet assemblage.
- Au cours d'une étape 102, on détermine les dimensions de l'enveloppe souple, en fonction des dimensions et courbures obtenues au cours de l'étape 101.
- Au cours d'une étape 103, on sélectionne un nombre de barrettes de traducteurs ultrasonores et leurs types, par exemple en fonction de leurs dimensions relativement aux dimensions et courbures déterminées au cours de l'étape 101 et des dimensions de l'enveloppe.
- Au cours d'une étape 104, on définit la disposition des barrettes de traducteurs ultrasonores et des éventuels écarteurs dans l'enveloppe souple.
- Au cours d'une étape 105, on réalise l'enveloppe, par exemple par moulage, pour que les alvéoles puissent accueillir les barrettes de traducteurs ultrasonores, puis on lui adjoint les barrettes de traducteurs ultrasonores, on remplit les alvéoles d'agent de couplage en évacuant tout fluide ou gaz étranger à l'agent de couplage et on referme les alvéoles avec la membrane étanche souple.
- Au cours d'une étape 106, on réalise un paramétrage du fonctionnement ultrasonore du dispositif, sans assemblage.
- Au cours d'une étape 107, on réalise un paramétrage numérique selon les matériaux de l'enveloppe et de l'assemblage à contrôler.
- Au cours d'une étape 108, on enveloppe les pièces à contrôler avec l'enveloppe souple du dispositif.
- Au cours d'une étape 109, on réalise un paramétrage après avoir assemblé le dispositif sur la pièce ou l'assemblage à contrôler en veillant à ce que la surface « active » des traducteurs se retrouve bien au regard de la pièce à ausculter et mis l'enveloppe sous tension avec le système de fermeture et de maintien.
- Au cours d'une étape 110, le moyen de séquencement 35 déclenche successivement, pour une barrette de traducteurs ultrasonores, l'émission et la réception d'ondes ultrasonores, les autres barrettes n'émettant aucun signal ultrasonore et ne transmettant au moyen de traitement aucun signal représentatif d'ondes ultrasonore reçue.
- Au cours d'une étape 111, le moyen 35 de traitement des signaux représentatifs des ondes ultrasonores reçues par au moins deux des barrettes constitue une représentation agrégeant les représentations des champs d'exploration des barrettes mises en fonctionnement.

Les paramétrages réalisés au cours des étapes 106, 107 et 109 décrivent ou modélisent le contrôle : désignation des barrettes de traducteurs ultrasonores à mettre en fonctionnement, en fonction de la zone d'exploration, repérage des traducteurs utilisés sur chaque barrette, dimensions de la zone d'exploration, matériaux des pièces analysées, fréquences ultrasonores utilisées (par exemple entre 5 et 10 MHz pour du polyéthylène), puissance utilisée pour obtenir un rapport signal sur bruit suffisant dans la zone d'exploration.

Eventuellement, des calibres de dimensions et matériaux identiques ou similaires aux pièces à contrôler sont utilisés pour réaliser les paramétrages considérés.

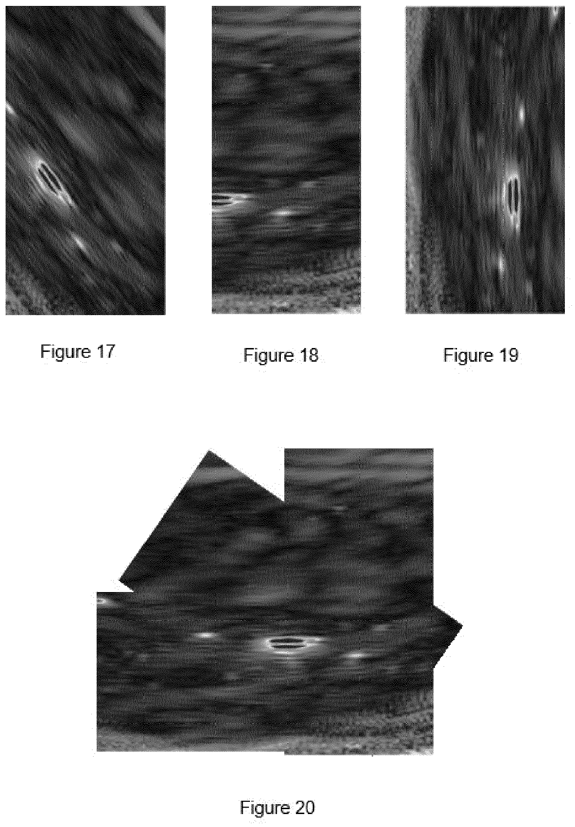

Pour la description des figures 17 à 20, on appelle « partiel » ce qui est obtenu par le traitement des signaux fournis par une seule barrette. On appelle « image » ce qui est en deux dimensions, selon un plan et « représentation », ce qui est en trois dimensions.

Les figures 17 à 19 représentent des images partielles des pièces analysées obtenues par traitement des signaux représentatifs des ondes ultrasonores reçues par les barrettes. Ces images partielles sont des extraites des représentations partielles, en trois dimensions, fournies par le traitement des signaux émis par chaque barrette individuellement.

La figure 20 représente une image des pièces à contrôler construite à partir des images partielles, en utilisant des techniques connues d'assemblage d'images représentant des scènes partiellement superposées. La construction d'une représentation en trois dimensions, dont est extraite cette image agrégée, est formée par agrégation des représentations partielles en trois dimensions fournies par chacune des barrettes.

Par exemple, pour agréger ces représentations partielles fournies par chaque barrette, on extrait des points caractéristiques des représentations, par exemple des pics locaux d'intensité et on sélectionne la superposition de représentation (définie en rotations de représentations partielles et en translation de ces représentations partielles) qui fait le mieux correspondre ces pics locaux.

La présente invention s'applique, notamment, au domaine de la détection de défauts et de fissures interne à des pièces, à des canalisations ou à des jonctions soumises à des efforts continus ou répétés, tels que des mouvements ou une pression. Elle s'applique aussi à la vérification de qualité des soudures par électro-soudage, soudage fusion dans l'emboîture ou encore soudure au miroir (ou « en bout à bout »).

## Revendications

1. Dispositif (20, 58, 59, 65) conformable de contrôle instantané non destructif par ultrasons d'au moins une pièce solide (51, 54, 70, 71, 91, 92), **caractérisé en ce qu'**il comporte :
- une enveloppe souple (21, 77, 94) munie d'une pluralité de compartiments (22, 23, 24, 25) étanches à un agent de couplage ultrasonore,
- dans chacun d'au moins deux des compartiments, une barrette (26, 27, 28, 29, 61, 62, 78, 79, 80, 81, 84, 85, 95, 96, 97, 98) de traducteurs ultrasonores baignant, sur au moins une face, dans ledit agent de couplage ultrasonore,
- un moyen (35) de séquencement des fonctionnements en émission et/ou en réception d'au moins deux des dites barrettes de traducteurs ultrasonores et
- un moyen (35) de traitement des signaux représentatifs des ondes ultrasonores reçues par au moins deux des barrettes pour constituer une représentation agrégeant les représentations des champs d'exploration desdites barrettes.

2. Dispositif (20, 58, 59, 65) selon la revendication 1, dans lequel l'agent de couplage ultrasonore remplit complètement chaque compartiment (22, 23, 24, 25) contenant une barrette (26, 27, 28, 29, 61, 62, 78, 79, 80, 81, 84, 85, 95, 96, 97, 98) de traducteurs ultrasonores.

3. Dispositif (20, 58, 59, 65) selon l'une des revendications 1 ou 2, qui comporte, entre au moins deux compartiments (22, 23, 24, 25), au moins un élément flexible (30, 31, 32, 33) pour prendre une forme arrondie et peu extensible ou compressible.

4. Dispositif (20, 58, 59, 65) selon la revendication 3, dans lequel au moins un élément flexible (30, 31, 32, 33) est rapporté dans l'enveloppe souple (21, 77, 94).

5. Dispositif (20, 58, 59, 65) selon l'une des revendications 3 ou 4, dans lequel au moins un élément flexible (30, 31, 32, 33) est partie intégrante de l'enveloppe souple (21, 77, 94).

6. Dispositif (20, 58, 59, 65) selon l'une des revendications 1 à 5, qui comporte un moyen (55, 56, 57, 82, 83, 99) de fermeture de l'enveloppe souple (21, 77, 94) sur elle-même.

7. Dispositif (20, 58, 59, 65) selon l'une des revendications 1 à 6, dans lequel l'enveloppe souple (21, 77, 94) comporte un matériau élastomère.

8. Dispositif (20, 58, 59, 65) selon l'une des revendications 1 à 7, dans lequel l'enveloppe souple (21, 77, 94) comporte du silicone.

9. Application du dispositif (20, 58, 59, 65) selon l'une des revendications 1 à 8 à l'inspection d'au moins un tube ou un assemblage de tubes (51, 54, 70, 71, 91, 92) en matières plastiques.

10. Procédé de contrôle instantané non destructif par ultrasons, **caractérisé en ce qu'**il comporte :
- une étape (108) d'enveloppement d'une partie de chaque pièce (51, 54, 70, 71, 91, 92) à contrôler, avec une enveloppe souple (21, 77, 94) munie d'une pluralité de compartiments étanches (22, 23, 24, 25) à un agent liquide conducteur d'ultrasons, chacun d'au moins deux des compartiments contenant une barrette (26, 27, 28, 29, 61, 62, 78, 79, 80, 81, 84, 85, 95, 96, 97, 98) de traducteurs ultrasonores baignant, sur au moins une face, dans ledit agent conducteur,
- une étape (110) de séquencement des fonctionnements en émission et/ou en réception d'au moins deux des dites barrettes de traducteurs ultrasonores et
- une étape (111) de traitement des signaux représentatifs de ondes ultrasonores reçues par au moins deux des barrettes pour constituer une représentation agrégeant les représentations des champs d'exploration desdites barrettes.

## Patentansprüche

1. Flexible Vorrichtung (20, 58, 59, 65) zur sofortigen zerstörungsfreien Kontrolle durch Ultraschall von mindestens einem Festteil (51, 54, 70, 71, 91, 92), **dadurch gekennzeichnet, dass** sie aufweist:
- eine elastische Hülle (21, 77, 94), die mit einer Vielzahl von gegenüber einem Ultraschall-Kopplungsmittel dichten Abteilen (22, 23, 24, 25) versehen ist,
- in jedem von mindestens zwei der Abteile eine Ultraschallwandlerleiste (26, 27, 28, 29, 61, 62, 78, 79, 80, 81, 84, 85, 95, 96, 97, 98), die auf mindestens einer Seite in das Ultraschall-Kopplungsmittel eintaucht,
- ein Mittel (35) zur Sequenzierung der Sende- und/oder Empfangsfunktionen von mindestens zwei der Ultraschallwandlerleisten und
- ein Mittel (35) zur Verarbeitung von Signalen, die für die von mindestens zwei der Leisten empfangenen Ultraschallwellen repräsentativ sind, um eine Darstellung zu bilden, die Darstellungen der Explorationsfelder der Leisten aggregiert.

2. Vorrichtung (20, 58, 59, 65) nach Anspruch 1, wobei das Ultraschall-Kopplungsmittel jedes Abteil (22, 23, 24, 25), das eine Ultraschallwandlerleiste (26, 27, 28, 29, 61, 62, 78, 79, 80, 81, 84, 85, 95, 96, 97, 98) enthält, vollständig füllt.

3. Vorrichtung (20, 58, 59, 65) nach einem der Ansprüche 1 oder 2, die zwischen mindestens zwei Abteilen (22, 23, 24, 25) mindestens ein flexibles Element (30, 31, 32, 33) aufweist, um eine abgerundete und wenig dehnbare oder komprimierbare Form anzunehmen.

4. Vorrichtung (20, 58, 59, 65) nach Anspruch 3, wobei mindestens ein flexibles Element (30, 31, 32, 33) in die elastische Hülle (21, 77, 94) eingebracht ist.

5. Vorrichtung (20, 58, 59, 65) nach einem der Ansprüche 3 oder 4, wobei mindestens ein flexibles Element (30, 31, 32, 33) integraler Bestandteil der elastischen Hülle (21, 77, 94) ist.

6. Vorrichtung (20, 58, 59, 65) nach einem der Ansprüche 1 bis 5, die ein Mittel (55, 56, 57, 82, 83, 99) zum Schließen der elastischen Hülle (21, 77, 94) an sich selbst aufweist.

7. Vorrichtung (20, 58, 59, 65) nach einem der Ansprüche 1 bis 6, wobei die elastische Hülle (21, 77, 94) ein Elastomermaterial aufweist.

8. Vorrichtung (20, 58, 59, 65) nach einem der Ansprüche 1 bis 7, wobei die elastische Hülle (21, 77, 94) Silikon aufweist.

9. Anwendung der Vorrichtung (20, 58, 59, 65) nach einem der Ansprüche 1 bis 8 bei der Inspektion mindestens eines Rohrs oder einer Rohrbaugruppe (51, 54, 70, 71, 91, 92) aus Kunststoffen.

10. Verfahren zur sofortigen zerstörungsfreien Kontrolle durch Ultraschall, **dadurch gekennzeichnet, dass** es aufweist:
- einen Schritt (108) des Umhüllens eines Teils jedes zu kontrollierenden Teils (51, 54, 70, 71, 91, 92) mit einer elastischen Hülle (21, 77, 94), die mit einer Vielzahl gegenüber einem ultraschallleitenden flüssigen Mittel dichten Abteilen (22, 23, 24, 25) versehen ist, wobei jedes von mindestens zwei der Abteile eine Ultraschallwandlerleiste (26, 27, 28, 29, 61, 62, 78, 79, 80, 81, 84, 85, 95, 96, 97, 98) enthält, die mindestens auf einer Seite in das leitende Mittel eintaucht,
- einen Schritt (110) der Sequenzierung der Sende- und/oder Empfangsfunktionen von mindestens zwei der Ultraschallwandlerleisten und
- einen Schritt (111) der Verarbeitung der repräsentativen Ultraschallwellensignale, die von mindestens zwei der Leisten empfangen werden, um eine Darstellung zu bilden, die Darstellungen der Explorationsfelder der Leisten aggregiert.

## Claims

1. Conformable device (20, 58, 59, 65) for instant non-destructive ultrasonic testing of at least one solid part (51, 54, 70, 71, 91, 92), **characterised in that** it comprises:
- a flexible envelope (21, 77, 94) provided with a plurality of compartments (22, 23, 24, 25) sealed to an ultrasonic coupling agent,
- in each of at least two of the compartments, a strip (26, 27, 28, 29, 61, 62, 78, 79, 80, 81, 84, 85, 95, 96, 97, 98) of ultrasonic transducers bathing, on at least one side, in said ultrasonic coupling agent,
- a means (35) for sequencing transmission and/or reception operations of at least two of said ultrasonic transducer strips and
- a means (35) for processing signals representative of the ultrasonic waves received by at least two of the strips to constitute a representation aggregating the representations of the fields of exploration of said strips.

2. Device (20, 58, 59, 65) according to claim 1, wherein the ultrasonic coupling agent completely fills each compartment (22, 23, 24, 25) containing a strip (26, 27, 28, 29, 61, 62, 78, 79, 80, 81, 84, 85, 95, 96, 97, 98) of ultrasonic transducers.

3. Device (20, 58, 59, 65) according to one of claims 1 or 2, which comprises, between at least two compartments (22, 23, 24, 25), at least one flexible element (30, 31, 32, 33) for taking a rounded and poorly extensible or compressible shape.

4. Device (20, 58, 59, 65) according to claim 3, wherein at least one flexible element (30, 31, 32, 33) is added into the flexible envelope (21, 77, 94).

5. Device (20, 58, 59, 65) according to one of claims 3 or 4, wherein at least one flexible element (30, 31, 32, 33) is an integral part of the flexible envelope (21, 77, 94).

6. Device (20, 58, 59, 65) according to one of claims 1 to 5, which comprises a means (55, 56, 57, 82, 83, 99) for closing the flexible envelope (21, 77, 94) on itself.

7. Device (20, 58, 59, 65) according to one of claims 1 to 6, wherein the flexible envelope (21, 77, 94) comprises an elastomer material.

8. Device (20, 58, 59, 65) according to one of claims 1 to 7, wherein the flexible envelope (21, 77, 94) comprises silicone.

9. Application of the device (20, 58, 59, 65) according to one of claims 1 to 8 to the inspection of at least one tube or assembly of tubes (51, 54, 70, 71, 91, 92) made of plastic materials.

10. Method for instant non-destructive ultrasonic testing, **characterised in that** it comprises:
- a step (108) of enveloping a portion of each part (51, 54, 70, 71, 91, 92) to be tested, with a flexible envelope (21, 77, 94) provided with a plurality of compartments sealed (22, 23, 24, 25) to an ultrasonic conductive liquid agent, each of at least two of the compartments containing a strip (26, 27, 28, 29, 61, 62, 78, 79, 80, 81, 84, 85, 95, 96, 97, 98) of ultrasonic transducers bathing, on at least one side, in said conductive agent,
- a step (110) of sequencing transmission and/or reception operations of at least two of said ultrasonic transducer strips and
- a step (111) of processing signals representative of ultrasonic waves received by at least two of the strips to constitute a representation aggregating the representations of the fields of exploration of said strips.
